(19) Europäisches Patentamt
European Patent Office
Office européen des brevets

(11) Numéro de publication: **0 316 232 B1**

(12) **FASCICULE DE BREVET EUROPEEN**

(45) Date de publication de fascicule du brevet: **04.08.93**  (51) Int. Cl.⁵: **H04N 7/00**, H04N 7/12

(21) Numéro de dépôt: **88402810.1**

(22) Date de dépôt: **08.11.88**

(54) **Procédé et système de diffusion de programme de télévision à haute définition.**

(30) Priorité: **12.11.87 FR 8715648**

(43) Date de publication de la demande:
**17.05.89 Bulletin 89/20**

(45) Mention de la délivrance du brevet:
**04.08.93 Bulletin 93/31**

(84) Etats contractants désignés:
**DE GB IT NL SE**

(56) Documents cités:
**EP-A- 0 082 489**
**EP-A- 0 178 938**
**EP-A- 0 222 592**
**WO-A-87/04034**

**ICC'79 CONFERENCE RECORD - INTERNA-TIONAL CONFERENCE ON COMMUNICA-TIONS, Boston, MA, 10-14 juin 1979, vol. 2 des 4, pages 2331-2335, IEEE, New York, US; H.G. MUSMANN et al.: "TV-transmission using a 64 KBIT/S transmission rate"**

(73) Titulaire: **FRANCE TELECOM**
**6, Place d'Alleray**
**F-75015 Paris(FR)**

Titulaire: **Etablissement Public Télédiffusion de France**
**10, rue d'Oradour-sur-Glane**
**F-75015 Paris(FR)**

(72) Inventeur: **Bernard, Philippe**
**rue du Clos Courtel**
**F-35512 Cesson Sevigne(FR)**

(74) Mandataire: **Fort, Jacques**
**CABINET PLASSERAUD 84, rue d'Amsterdam**
**F-75009 Paris (FR)**

EP 0 316 232 B1

FREQUENZ, vol. 37, no. 11/12, novembre/décembre 1983, pages 324-333, Berlin, DE; H. SCHÖNFELDER et al.: "Qualitätsverbesserung einer PAL-Farbfernsehübertragung durch digitale Filtertechnik"

IEEE TRANSACTIQNS QN CQMMUNICA-TIQNS, vol. CQM-34, no. 10, octobre 1986, pages 1031-1037, IEEE, New York, US; B.G. HASKELL: "Semicompatible high definition televison using field differential signals"

REVIEW QF THE ELECTRICAL CQMMUNICA-TIQN LABQRATQRIES, vol. 32, no. 3, mai 1984, pages 508-516, Tokyo, JP; N. MUKAWA et al.: "Temporal subsampling methods in TV signal interframe coding"

**Description**

La présente invention concerne les procédés et systèmes de diffusion de programme de télévision à haute définition, dite TVHD, destinés à fournir une image ayant un nombre de lignes et de points par ligne beaucoup plus élevé que celui des normes actuelles. Le projet européen EUREKA EU95 prévoit par exemple une image à la fréquence de 50 Hz, ayant 1 250 lignes au lieu de 625 lignes et un nombre de points par ligne doublé.

Pour éviter tout ambiguité, il convient de noter qu'une "image" est constituée par plusieurs "trames" tandis qu'en Grande-Bretagne on utilise souvent les notations "frame" pour "image" et "field" pour "trame".

Il est important que les programmes de TVHD puissent, au moins pendant une période transitoire, être transmis sur les canaux de diffusion disponibles et être reçus par des récepteurs existants. En particulier il va se poser le problème de la diffusion de programmes de TVHD sur un canal de télévision MAC-paquet depuis un satellite. La norme MAC fixe en effet la largeur de canal à 20,5 MHz seulement, c'est-à-dire à une valeur très inférieure à celle requise pour la transmission d'images en TVHD.

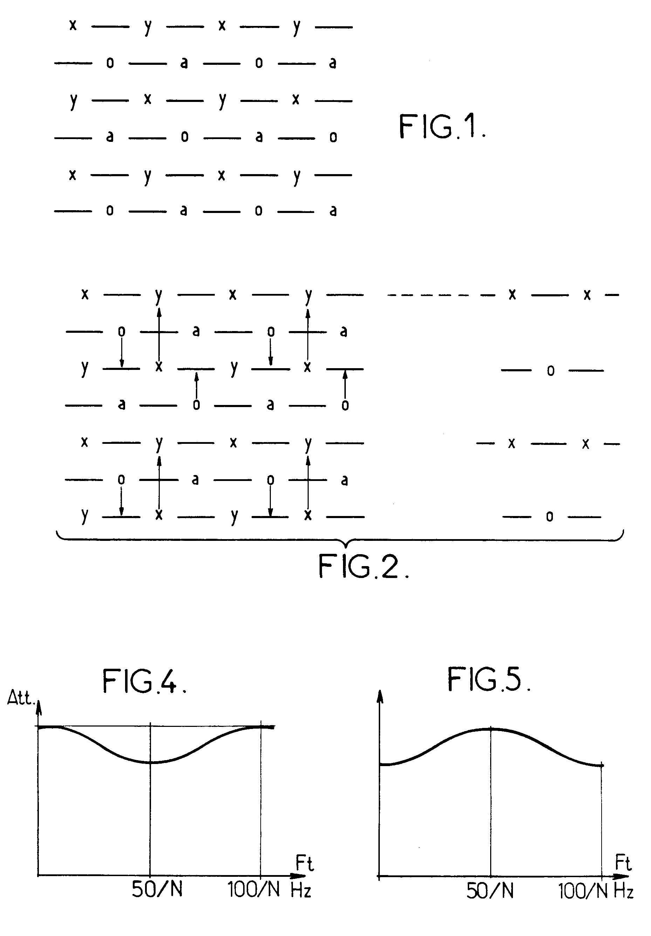

On a déjà proposé divers procédés de compression d'informations visant à réduire la largeur de bande requise pour l'image TVHD à celle qui est disponible. Ces procédés impliquent un sous-échantillonnage à l'émission et une interpolation à la réception. On peut ainsi acheminer une image haute définition à faible activité temporelle, (c'est-à-dire où les modifications sont faibles d'une image à la suivante) dans un canal de transmission étroit, en étalant les informations spatiales d'une image sur plusieurs trames de télévision successives. Des techniques de brassage, purement spatiales, rendent possible de diffuser l'ensemble des lignes d'une image haute définition avec un balayage à nombre de lignes plus réduit. La partie gauche de la figure 2 montre une technique de brassage verticale appliquée à la structure en quinconce de lignes sur quatre trames montrée en figure 1, les échantillons x, o, y et a correspondant respectivement à quatre trames successives numérotées 1, 2, 3 et 4.

Le document EP-A-0 082 489 décrit un tel procédé de réduction de bande passante, utilisant la conversion du signal de télévision HD à analyse séquentielle en un signal à balayage entrelacé pour permettre la transmission dans un canal de largeur insuffisante pour transmettre directement le signal à analyse séquentielle. La conversion de balayage exige un sous-échantillonnage de l'image, susceptible de dégrader l'image.

Un filtrage limite la bande passante du signal source et inhibe les défauts de conversion. D'après les pages 18 et 19, ce procédé implique un filtrage passe-bas temporel, limitant le "flicker", qui supprime totalement l'information haute fréquence et rend impossible sa reconstitution, même approximative, à la réception.

Mais le sous-échantillonnage et le brassage, désignés aussi par le terme anglais "Shuffling", constituent des opérations de codage qui affectent la qualité de l'image "compatible", ce terme désignant toute image délivrée par un récepteur de première génération (non prévu pour la réception de TVHD) alimenté via un canal de transmission ou de diffusion par des émissions codées par un codeur HD. Les défauts sont dus principalement aux repliements de spectre dus au sous-échantillonnage sub-Nyquist et au brassage des échantillons. On pourra se reporter à ce sujet à l'article "Analyse de structures de sous-échantillonnage spatio-temporel d'un signal TVHD en vue de sa transmission dans un canal MAC" Proceedings colloque TVHD, OTTAWA octobre 1987.

La transmission d'une image haute définition fixe dans un canal de largeur réduite se traduit ainsi en particulier par une activité temporelle de l'image compatible, qui la dégrade.

On pourrait penser que l'image compatible pourrait être améliorée par les méthodes classiques de filtrage spatial. En fait, il apparaît que les techniques d'atténuation de suppression de certaines fréquences spatiales provoquent une perte de résolution spatiale sur l'image compatible, ne corrigent pas tous les défauts et sont peu résistantes aux bruits de transmission. Il subsiste en particulier certains effets du sous-échantillonnage sub-Nyquist, notamment des repliements de spectre et des effets de brassage de lignes qui se traduisent par des défilements sur les contours.

L'invention vise à fournir une image compatible très améliorée par rapport à celles que permettent d'obtenir les procédés connus de sous-échantillonnage avant transmission et d'interpolation à la réception aussi bien que l'application des techniques de filtrage spatial. Elle part d'une analyse qui a montré que le filtrage temporel est susceptible d'apporter des améliorations très substantielles, à condition de laisser subsister, dans le signal transmis, de l'énergie correspondant au spectre replié afin de reconstruire, à la réception, une image TVHD à faible activité temporelle.

En d'autres termes, l'invention utilise la constatation que l'on peut diminuer, voire même supprimer, les effets du sous-échantillonnage sub-Nyquist par filtrage partiel d'énergies temporelles correspondant à

3

l'énergie de repliement, ce filtrage provoquant une atténuation qui constitue un compromis entre la qualité de l'image compatible et la résistance au bruit.

L'obtention d'une image HD à faible activité temporelle (ce terme incluant une image fixe) exige de préserver une fraction de l'énergie de repliement.

Mais une diminution notable de cette énergie permet d'éviter l'effet du sous-échantillonnage sub-Nyquist sur l'image compatible.

L'invention propose donc un procédé de diffusion de programmes de télévision à haute définition sur un canal de transmission de capacité inférieure à la bande spectrale du signal d'image, conforme à la revendication 1.

Ce procédé n'est optimal que pour des zones d'image à activité temporelle bornée. Dans un mode avantageux de mise en oeuvre de l'invention, on adaptera le codage et l'atténuation (et corrélativement l'accentuation et le décodage) à l'activité temporelle de l'image.

- si l'image a une faible activité temporelle, on utilisera un échantillonnage de l'image sur n trames. Pratiquement, on pourra considérer que cette condition est remplie pour les images dont l'activité temporelle est comprise entre les plans ft = - 50/2n Hz et ft = + 50/2n Hz, ft représentant les fréquences temporelles de l'image, en supposant que la cadence d'image est de 50 Hz.

En général, on choisira n = 4.

- si l'activité temporelle est supérieure aux limites ci-dessus, il sera avantageux d'utiliser un échantillonnage différent,

soit sur un nombre de trames plus faible, c'est-à-dire avec n inférieur à 4,

soit même sur une seule trame.

Dans ce cas le sous-échantillonnage spatial est moins complexe et les repliements spectraux de l'image transmise moins gênant. Le brassage a également moins d'effet, le contenu fréquentiel de l'image étant plus pauvre.

Suivant un mode particulier de mise en oeuvre de l'invention, le procédé défini ci-dessus ne sera appliqué que pendant les périodes où l'image présente une faible activité temporelle, où l'énergie de repliement est confinée à proximité du plan $f_0 t$ = 50/n Hz. Les harmoniques, correspondant à des multiples de $f_0 t$, sont moins gênants que la fréquence fondamentale car l'oeil s'asservit en priorité sur les faibles fréquences temporelles.

En résumé, le procédé suivant l'invention, appliqué aux périodes où l'image a une faible activité temporelle, permet de diminuer les défauts sur l'image compatible en préservant l'information contenue dans l'énergie de repliement en vue de reconstruire l'image HD.

L'invention propose également un système permettant de mettre en oeuvre le procédé ci-dessus défini, comforme à la revendication 9. Un dispositif commitateur sera avantageusement intercalé immédiatement en aval du module atténuateur (ou accentuateur) pour envoyer au modulateur (ou au décodeur) soit l'image ayant subi le traitement numérique d'atténuation temporelle, soit un signal différent, en fonction de l'activité temporelle de l'image.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1, déjà mentionnée, montre un exemple de structure en quinconce de lignes, stable, sur quatre trames, utilisable pour un signal de télévision haute définition ;
- la figure 2 est un schéma donnant un exemple de brassage de trames et de sous-échantillonnage ;
- la figure 3 est un synoptique général d'un système de diffusion mettant en oeuvre l'invention ;
- les figures 4 et 5 sont des exemples de gabarits de filtrage d'atténuation et d'accentuation, respectivement ;
- les figures 6 et 7 sont des schémas montrant les moyens de mise en oeuvre du procédé suivant l'invention à l'émission et à la réception, respectivement ;
- les figures 8 et 9 sont des synoptiques détaillés d'exemples de modules d'atténuation et d'accentuation ;
- les figures 8a et 9a montrent une variante de réalisation des modules d'atténuation et d'accentuation;
- la figure 10 est un schéma synoptique montrant un circuit de traitement de l'information de mouvement pour commander de commutateur des figures 8 et 9 ;
- la figure 11 est un schéma montrant le rôle des mémoires d'image dans le module de la figure 8 ;
- la figure 12 est un schéma faisant apparaître les notations utilisées pour la description du fonctionnement du module d'atténuation de la figure 8.

A titre d'exemple, la mise en oeuvre du procédé suivant l'invention sera décrite dans le cas d'une image HD avec sous-échantillonnage sur N = 4 trames de transmission. Dans le cas d'une image à entrelacement à 50 Hz la période de répétition d'image T est alors de 1/25 sec avec brassage de lignes d'un facteur 2. Ce mode de sous-échantillonnage et de brassage est montré en figure 2 : à la partie gauche de la ligne, x, y, o et a désignent encore les échantillons dans les trames d'ordre 1, 3, 2 et 4 respectivement, ayant une structure en quinconce. Les flèches indiquent le brassage ou "shuffling" de lignes. La partie droite montre les échantillons transmis pour l'ensemble des trames 1 et 2 ; les échantillons complémentaires seraient transmis pour les trames 3 et 4. On peut ainsi transmettre par exemple des images HD provenant d'une source à 1150 lignes utiles sur un canal n'autorisant que 288 lignes par trame.

L'atténuation et l'accentuation peuvent l'une et l'autre être réalisées par filtrage en cosinus surelevé suivant les gabarits des figures 4 et 5, avec une ouverture temporelle de trois images pour minimiser la complexité de réalisation cablée. Toutefois, l'ouverture pourrait être plus élevée, par exemple de cinq images. Le filtrage opère soit sur les trames paires, soit sur les trames impaires, en alternance.

L'atténuation peut s'écrire :

$$I_t(x,y,t) = a_o I_o(x,y,t) + a_{-1} I_o(x,y,t\text{-}T) + a_1 I_o(x,y,t+T) \qquad (1)$$

où :

$I_o(x,y,t)$ : valeur initiale au point de coordonnées $(x,y)$ et à l'instant $t$,

$I_t(x,y,t)$ : valeur transmise après atténuation au point $(x,y)$ et à l'instant $t$,

avec $a$ = valeur de l'atténuation pour ft, égal à 12,5 Hz dans le cas ci-dessus, les valeurs $a_o$ et $a_1$ sont :

$$a_0 = (1+a)/2$$
$$a_1 = a_{-1} = (1\text{-}a)/4$$

Si on désigne par $I_r(x,y,t)$ la valeur après accentuation au point $(x,y)$ et à l'instant $t$, l'accentuation à effectuer sera :

$$I_r(x,y,t) = b_o I_t(x,y,t) + b_{-1} I_t(x,y,t\text{-}T) + b_1 I_t(x,y,t+T)$$

avec

$$b_o = (1+a)/2.a$$
$$b_{-1} = b_1 = (a\text{-}1)/4.a$$

Il reste à déterminer une valeur optimale du coefficient a : le choix est fait en tenant compte de la résistance au bruit d'une chaîne d'atténuation et d'accentuation et du seuil de visibilité des défauts de l'image compatible. Une atténuation de 6 dB à 12,5 Hz semble proche de l'optimum. Toutefois on peut pratiquement aller de 4 à 8 dB. Elle correspond à $a = 0,5$.

On a alors :
$$a_o = 0,75$$
$$a_1 = a_{-1} = 0,125$$
$$b_o = 1,5$$
$$b_1 = b_{-1} = \text{-}0,25$$

Toutefois d'autres valeurs pourraient être plus avantageuses pour d'autres largeurs de canaux.

Le choix de l'équation (1) conviendra pour des séquences ayant une faible activité temporelle, correspondant typiquement à des déplacements de l'ordre de la dimension d'un pixel d'une image à la suivante, ou n'ayant aucune activité temporelle. Mais un traitement différent est préférable en début et en fin de séquence à faible activité temporelle ; il faut noter que l'invention peut être mise en oeuvre avec fractionnement de l'image en zones et transmission de données d'assistance indiquant l'activité temporelle de l'image, comme indiqué par exemple dans le document PCT/WO/87 04034.

On peut alors utiliser, avec les mêmes notations que pour (1) :
pour la première image

$$a'_o = a_o \qquad b'_o = b_o$$
$$a'_1 = 2a_1 \qquad b'_1 = 2b_1$$
$$a'_{-1} = 0 \qquad b'_{-1} = 0$$

pour la dernière image

$$a''_o = a_o \qquad b''_o = b_o$$
$$a''_{-1} = 2a_1 \qquad b''_{-1} = 2b_1$$
$$a''_1 = 0 \qquad b''_1 = 0$$

On décrira maintenant une constitution possible des modules permettant de réaliser l'atténuation à l'émission et l'accentuation à la réception.

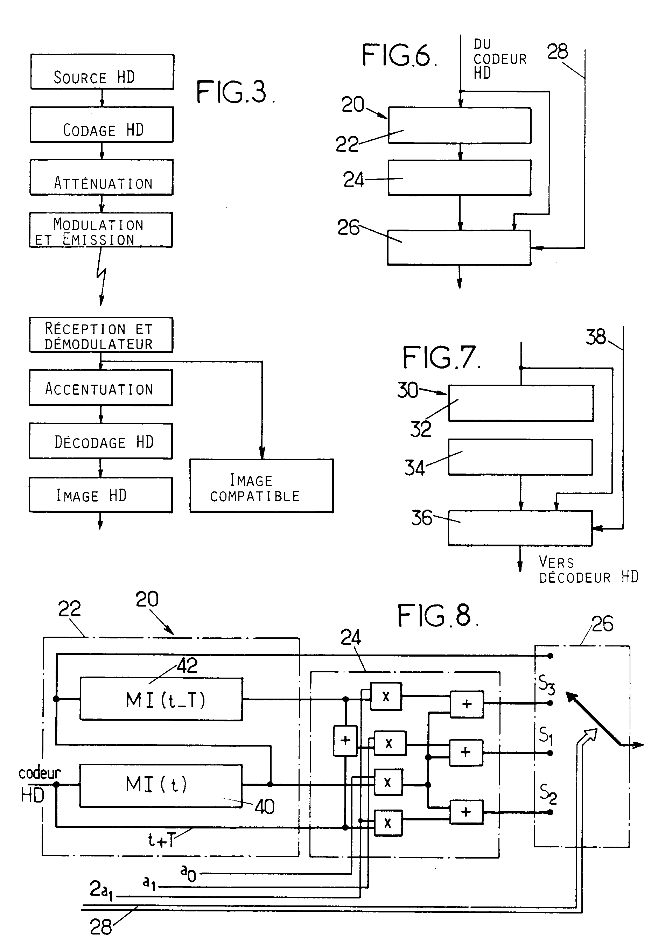

La constitution générale de l'émetteur et d'un récepteur peut être celle montrée en figure 3. Le récepteur se différencie d'un récepteur MAC classique par la présence des moyens d'accentuation.

Le module d'atténuation 20 schématisé en figure 6 est destiné à être interposé entre la sortie du codeur haute définition et le modulateur d'un émetteur, par exemple de diffusion suivant la norme MAC Paquets. On ne décrira pas cette dernière partie, non concernée par l'invention.

Le module 20 comporte des mémoires d'image 22, qu'on décrira davantage plus loin, rendues nécessaires par l'ouverture temporelle des filtres d'atténuation 24 qui suivent les mémoires. Le signal présentant une atténuation temporelle est transmis au modulateur par l'intermédiaire d'un circuit de commutation 26 destiné à gérer les effets de bord (au sens temporel) et les cas de figure à activité temporelle inadéquate, grâce à une information de mouvement 28 délivrée par le codeur HD.

Le module d'accentuation 30 (figure 7) a une constitution similaire à celle du module 20 : il comprend des mémoires d'image 32 dont la capacité est fonction de l'ouverture temporelle des filtres d'accentuation 34 et un circuit de commutation 36 qui gère les effets de bord et les cas de figure à activité temporelle inadéquate, grâce à une information de mouvement 38 acheminée par le canal de transmission ou calculée localement. La sortie du circuit 36 attaque le décodeur HD.

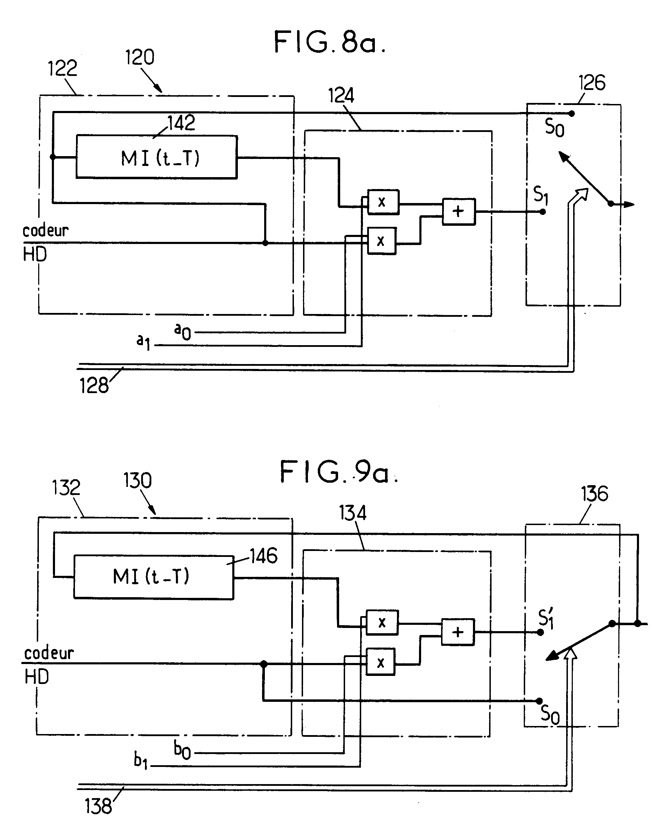

La figure 8 montre la constitution des différents composants du module d'atténuation 20 dans le cas mentionné plus haut d'une atténuation faisant intervenir trois trames successives. Les mémoires vidéo 22 comportent deux mémoires vives 40 et 42 montées en cascade, respectivement affectées aux images aux temps $t$ et $t-T$ ($T$ étant la période de répétition des trames paires ou impaires). La filtre numérique d'atténuation 24 est du type 1-2-1 à trois coefficients, mettant en jeu une correspondance pixel à pixel dans trois plans temporels successifs. Il est constitué d'additionneurs et de multiplieurs suivant une disposition effectuant une pondération, qu'on décrira plus loin.

Le premier et le quatrième multiplieurs du filtre 24 multiplient par $2a_1$ respectivement la donnée reçue du codeur à l'instant $t$ et celle reçue $2T$ avant ; le second multiplie par $a_o$ la donnée retardée de $T$ ; le troisième multiplie par $a_1$ la somme des données instantanée et retardée de $2T$.

Ainsi les sorties $S_1$, $S_2$ et $S_3$ correspondent à des atténuations temporelles différentes.

$S_1$ : atténuation sans effet de bord.

Ce signal résulte d'une sommation des signaux pris aux instants $t-T, t, t+T$ pondérés par les coefficients respectifs $a_1$, $a_o$ et $a_1$.

$S_2$ : atténuation en début de séquence.

Ce signal résulte de la sommation des signaux pris aux instants $t$ et $t+T$ pondérés des coefficients $a_o$ et $a'_1$, avec $a'_1 = 2a_1$.

$S_3$ : atténuation en fin de séquence à faible activité.

Ce signal résulte de la sommation des signaux pris aux instants $t$ et $t-T$ pondérés des coefficients $a_o$ et $a'_1$, avec $a'_1 = 2a_1$.

Le circuit de commutation 26 peut être regardé comme un commutateur permettant de relier la sortie de l'atténuateur à l'une quelconque des sorties $S_1$, $S_2$, $S_3$ du filtre 24 et d'une sortie de signal non traité, suivant l'information de mouvement 28 fournie par le codeur.

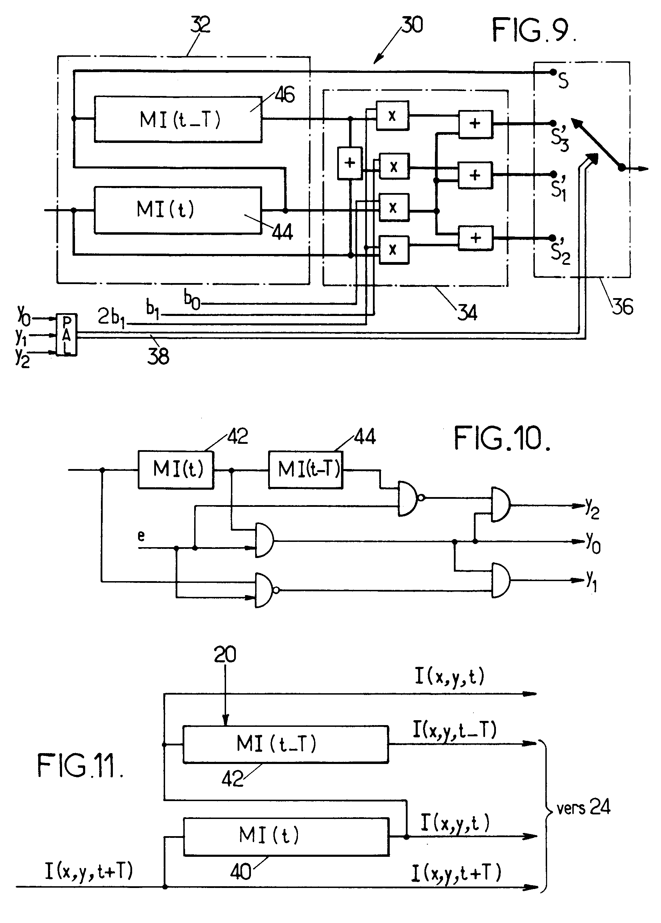

Le module d'accentuation (figure 9) a une constitution similaire à celle du module d'atténuation : il comporte également deux mémoires vidéo 44 et 46, en raison de l'ouverture temporelle du filtrage d'accentuation. Le filtre d'accentuation 34 effectue les mêmes opérations de calcul que l'atténuateur, mais avec des coefficients de pondération différents $b_o$, $b_1$, $2b_1$. Le commutateur 36 effectue encore une commutation entre les trois signaux calculés $S'_1$, $S'_2$, $S'_3$ et le signal transmis original $S$, en fonction d'une information de mouvement 38 fournie par le décodeur.

La table de vérité des commutateurs 26 et 36 peut être la suivante, en désignant par $y_o$, $y_1$ et $y_2$ les signaux de sortie attaquant les commutateurs (e étant l'état de traitement correspondant à l'activité temporelle) :

6

|  | non traité | début de séquence | stabilisé | fin de séquence |
|---|---|---|---|---|
| $y^1$ | 0 | 1 | 1 | 1 |
| $y_2$ | 0 | 1 | 0 | 0 |
| $y_3$ | 0 | 0 | 0 | 1 |

Cette table de vérité peut être réalisée sous forme du circuit de la figure 10.

La variante de réalisation de l'invention montrée en figures 8a et 9a (où les éléments correspondant à ceux des figures 8 et 9 sont désignés par le même numéro de référence augmenté de 100) utilise :

- un filtre transversal d'atténuation à l'émission, et
- un filtre récursif d'accentuation à la réception.

L'ouverture temporelle peut alors être réduite à une image.

L'atténuation s'écrit cette fois :

$$I_t(x,y,t) = a_o I_o(x,y,t) + a_{-1} I_o(x,y,t-T) \qquad \text{(1 bis)}$$

où :

$I_o(x,y,t)$ : valeur initiale au point de coordonnées $(x,y)$ et à l'instant $t$,

$I_t(x,y,t)$ : valeur transmise après atténuation au point $(x,y)$ et à l'instant $t$,

avec $a$ = valeur de l'atténuation pour $ft$,

les valeurs $a_o$ et $a_1$ sont :

$a_0 = (1+a)/2$

$a_{-1} = (1-a)/2$

Si on désigne par $I_r(x,y,t)$ la valeur après accentuation au point $(x,y)$ et à l'instant $t$, l'accentuation à effectuer sera :

$$I_r(x,y,t) = b_o I_t(x,y,t) + b_{-1} I_r(x,y,t-T)$$

avec $b_o = (1+a)/2.a$

$b_{-1} = (a-1)/2.a$

Avec

$a = 0,5$ on a :

$a_o = 0,75$

$a_{-1} = 0,25$

$b_o = 1,5$

$b_{-1} = -0,5$

Si on adopte l'équation (1 bis) pour des séquences ayant une activité temporelle faible, correspondant typiquement à des déplacements de l'ordre de la dimension d'un pixel d'une image à la suivante, ou nulle, on peut alors utiliser, avec les mêmes notations que pour (1 bis) ; pour la première image en début de séquence à activité faible :

$a'_o = 1 \qquad b'_o = 1$

$a'_{-1} = 0 \qquad b'_{-1} = 0$

Dans cette variante le module 20 comporte une seule mémoire d'image 122 (figure 8a), qu'on décrira davantage plus loin, correspondant à l'ouverture temporelle des filtres d'atténuation 124 qui suivent les mémoires.

Le module d'accentuation 130 comprend alors une seule mémoire d'image 132 (figure 9a) et le circuit de commutation 36 qui gère les effets de bord et les cas de figure à activité temporelle inadéquate, grâce à l'information de mouvement.

La figure 8a montre la constitution des différents composants du module d'atténuation 20 dans le cas mentionné plus haut d'une atténuation faisant intervenir une seule mémoire. La mémoire vidéo 122 comporte une mémoire vive 142 affectée à l'image au temps $t-T$ (T étant la période de répétition des trames paires ou impaires). Le filtre numérique d'atténuation 124 met en jeu une correspondance pixel à pixel dans deux plans temporels successifs. Il est constitué d'additionneurs et de multiplieurs suivant une disposition effectuant une pondération, qu'on décrira plus loin.

Ainsi les sorties $S_1$ et $S_0$ correspondent à des atténuations temporelles différentes.

$S_1$ : atténuation sans effet de bord.

Ce signal résulte d'une sommation des signaux pris aux instants t-T et t, pondérés par les coefficients respectifs $a_1$ et $a_o$.

$S_0$ : atténuation nulle en début de séquence (signal non traité).

Le circuit de commutation 126 peut être regardé comme un commutateur permettant de relier la sortie de l'atténuateur à l'une ou l'autre des sorties $S_1$ et $S_0$, suivant l'information de mouvement 128 fournie par le codeur.

Le module d'accentuation (figure 9a) a une constitution similaire à celle du module d'atténuation : il comporte également, en raison de l'ouverture temporelle du filtrage d'accentuation, une seule mémoire vidéo 146 qui stocke le résultat précédent, à t-1. Le filtre d'accentuation 34 effectue les mêmes opérations de calcul que l'atténuateur, mais avec des coefficients de pondération différents $b_o$, $b_{-1}$ et sur des signaux différents. Le commutateur 136 effectue encore une commutation entre les signaux calculés et le signal transmis original $S_0$, en fonction d'une information de mouvement 138 fournie par le décodeur : cette information est calculée comme dans le codeur.

Le tableau des commutations 26 et 36 peut être le suivant :

|  | début | stabilisé |
|---|---|---|
| sortie codeur | $S_0$ | $S_1$ |
| sortie décodeur | $S_0$ | $S'_1$ |

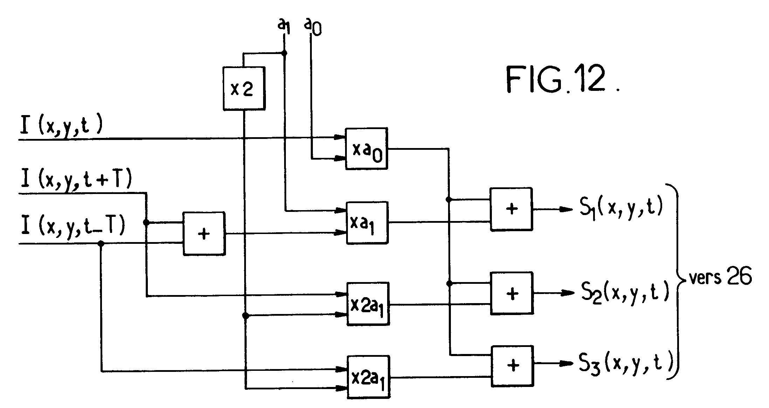

Le fonctionnement séquentiel des modules des figures 6 à 9 sera maintenant décrit en faisant référence aux indications portées sur les figures 11 et 12 et aux notations suivantes : chaque image ou trame sera repérée par sa coordonnée temporelle t. Chaque ligne sera repérée par un ordonnée spatiale y. Chaque point d'une ligne sera repéré par une abscisse spatiale x. Un point de l'image est en conséquence défini sous la forme I(x,y,t) I désignant la luminance (bien que l'invention s'applique aussi bien à la chrominance).

La description suivante concerne l'atténuation. Mais il suffit d'intervertir $a_o$ et $b_o$, $a_1$ et $b_1$ pour qu'elles concernent l'accentuation.

Le point courant original (x,y,t + T) se présente à l'entrée du système et la valeur I représentant son intensité est stockée dans la mémoire 40 d'image MI (t) et est dirigée vers l'extérieur de la mémoire vidéo 22. Au même instant, la valeur de l'intensité I au point (x,y,t) passe de la mémoire d'image MI (t) à la mémoire d'image 42 MI (t-T) et à l'extérieur de la mémoire vidéo. Au même instant encore, la valeur I du point (x,y,t-T) quitte la mémoire vidéo 20.

Dans le cas d'images à 50 Hz (standard européen) on a T = 1/25 sec.

Le filtre 24 doit calculer trois valeurs :

(a) En activité temporelle stabilisée :

$$P_o(x,y,t) = a_o I(x,y,t) + a_1 I(x,y,t + T) + a_{-1} I(x,y,t-T)$$

qui peut s'écrire, puisque $a_{-1} = a_1$ :

$$P_o(x,y,t) = a_o I(x,y,t) + a_1 [I(x,y,t + T) + I(x,y,t-T)]$$

(b) En début de séquence

$$P_1(x,y,t) = a_o I(x,y,t) + 2a_1 I(x,y,t + T)$$

(c) En fin de séquence

$$P_2(x,y,t) = a_o I(x,y,t) + 2a_1 I(x,y,t-T)$$

Les opérations ci-dessus sont effectuées en parallèle. La commutation par 26 (ou par 36) est commandée par l'information de mouvement provenant du codeur HD en phase avec le point courant (x,y,t) calculé.

**Revendications**

1. Procédé de diffusion de programmes de télévision à haute définition sur un canal de transmission de capacité inférieure à la bande spectrale du signal d'image, procédé suivant lequel on effectue à l'émission un codage à haute définition avec sous-échantillonnage répartissant l'information spatiale de l'image sur n trames successives, n étant un nombre entier supérieur à 1, et à la réception un filtrage d'interpolation, caractérisé en ce qu'on soumet le signal d'image codée à haute définition à :
   - un filtrage temporel d'atténuation partielle de l'énergie dans la région proche de $f_0/n$, $f_0$ étant la fréquence trame d'analyse, laissant subsister une fraction de l'énergie correspondant au spectre replié par suite du sous-échantillonnage lors dudit codage haute définition, avant émission, et
   - avant décodage haute définition avec interpolation à la réception, à un filtrage temporel d'accentuation, correspondant à l'atténuation, destiné à restituer l'amplitude relative des composantes atténuées du spectre transmis, dans la région proche de $f_0/n$.

2. Procédé selon la revendication 1, caractérisé en ce que l'atténuation et l'accentuation sont réalisées par filtrage en cosinus surélevé centré sur la fréquence $f_0/n$.

3. Procédé selon la revendication 1 ou 2, caractérisé en ce que l'ouverture temporelle de la fenêtre de filtrage à l'atténuation et à l'accentuation correspond à trois trames successives.

4. Procédé selon la revendication 1, 2 ou 3, caractérisé en ce que le filtrage temporel d'atténuation est prévu pour fournir une atténuation comprise entre 5 et 10 dB, à la fréquence $f_0/n$.

5. Procédé selon l'une quelconque des revendications précédentes, caractérisé en ce que le filtrage temporel d'atténuation est tel que la valeur $I_t(x,y,t)$ transmise après atténuation en un point (x,y) et à l'instant t soit liée à la valeur initiale $I_0$ au même point et à l'instant t par la relation :

$$I_t(x,y,t) = a_0 I_0(x,y,t) + a_{-1} I_0(x,y,t\text{-}T) + a_1 I_0(x,y,t+T)$$

où T est la période de répétition d'image,
et où

$$a_0 = (1+a)/2$$
$$a_1 = a_{-1} = (1\text{-}a)/4$$

a étant l'atténuation recherchée pour la fréquence $f_0/n$, où n est le nombre de trames correspondant à l'ouverture temporelle.

6. Procédé selon la revendication 1 ou 2, caractérisé en ce que l'ouverture temporelle de la fenêtre de filtrage est de une image.

7. Procédé selon la revendication 1, 2 ou 6, caractérisé en ce que le filtrage temporel d'atténuation est tel que la valeur $I_t(x,y,t)$ transmise après atténuation en un point (x,y) et à l'instant t soit liée à la valeur initiale $I_0$ au même point et à l'instant t par la relation :

$$I_t(x,y,t) = a_0 I_0(x,y,t) + a_{-1} I_0(x,y,t\text{-}T)$$

où T est la période de répétition d'image,

$$a_0 = (1+a)/2$$
$$a_{-1} = (1\text{-}a)/2$$

a étant l'atténuation recherchée pour la fréquence $f_0/n$, où n est le nombre de trames correspondant à l'ouverture temporelle,
et en ce que l'accentuation est telle que la valeur $I_r(x,y,t,)$ après accentuation soit liée à la valeur $I_t(x,y,t)$ transmise par la relation :

$$I_r(x,y,t) = b_0 I_t(x,y,t) + b_{-1} I_r(x,y,t\text{-}T)$$

où

$b_0 = (1 + a)2A$ et $b_{-1} = (a-1)2a$.

**8.** Procédé selon l'une quelconque des revendications précédentes, caractérisé en ce que l'on détecte les débuts et les fins de séquence à faible activité temporelle et on effectue, au cours de ces débuts et fins de séquence, un filtrage d'atténuation différent de celui en cours de séquence.

**9.** Système de diffusion de programmes de télévision haute définition, comprenant un émetteur et un récepteur haute définition, dont l'émetteur comporte un codeur haute définition effectuant un sous-échantillonnage de l'image répartissant l'information spatiale sur n trames successives, n étant un nombre entier supérieur à 1, et un modulateur d'émission et dont le récepteur comporte un démodulateur effectuant un filtrage d'interpolation et un décodeur haute définition,
caractérisé en ce que l'émetteur comporte, entre le codeur et le modulateur, un module d'atténuation (20) constitué par un filtre temporel d'atténuation partielle de l'énergie dans la région proche de $f_0/n$, $f_0$ étant la fréquence trame d'analyse, laissant subsister une fraction de l'énergie de repliement résultant du sous-échantillonnage, et en ce que le récepteur comporte, entre le démodulateur et le décodeur, un module d'accentuation (30) constitué par un filtre temporel d'accentuation destiné à restituer l'énergie de repliement, effectuant les mêmes opérations de calcul que le filtre temporel d'atténuation, avec des coefficients de pondération différents, de manière à restituer l'amplitude relative des composantes atténuées du spectre transmis, dans la région proche de $f_0/n$.

**10.** Système selon la revendication 9, caractérisé en ce que l'émetteur comprend un circuit de commutation (26) permettant d'envoyer au modulateur le signal d'image ayant subi le traitement numérique d'atténuation, dans le cas où l'image présente une faible activité temporelle, comprise entre -50/2n Hz et +50/2n Hz et en ce que le récepteur comprend un circuit de commutation (36) d'insertion du filtre temporel d'accentuation en fonction d'une information de mouvement (28) provenant du codeur haute définition.

## Claims

**1.** A method for broadcasting high definition television programs over a transmission channel having a capacity lower than the spectral band of the image signal, comprising, on transmission, carrying out high definition encoding with sub-sampling for distributing the spatial data of the image over n sucessive fields, n being an integer greater than 1, and interpolation filtering upon reception,
characterized by the step of subjecting the high definition coded image signal:
- to time filtering for partially attenuating energy in a region close to $f_0/n$, $f_0$ being the analysis field frequency, and for leaving part of the energy corresponding to the spectrum folded due to sub-sampling during said high definition encoding, before transmission, and before high definition decoding with interpolation upon reception,
- to enhancement time filtering of an amount corresponding to the attenuation, for restoring the relative amplitudes of the attenuated components of the transmitted spectrum, in the region close to $f_0/n$.

**2.** A method according to claim 1,
characterized in that the attenuation and enhancement are carried out by upwardly offset cosine filtering centered on frequency $f_0/n$.

**3.** A method according to claim 1 or 2,
characterized in that the time opening of the filtering window on attenuation and enhancement corresponds to three successive fields.

**4.** A method according to claim 1, 2 or 3,
characterised in that the attenuation time filtering is selected for providing an amount of attenuation comprised between 5 and 10 dB, at frequency $f_0/n$.

5. A method according to any one of the preceding claims,
characterized in that said attenuation time filtering is such that the value $I_t(x,y,t)$ transmitted after attenuation at a point $(x,y)$ and at time t is related to the initial value $I_0$ at the same point and at time t by the relation:

$$I_t(x,y,t) = a_0 I_0(x,y,t) + a_{-1} I_0(x,y,t\text{-}T) + a_1 I_0(x,y,t + T)$$

where:
T is the recurrence period of the frame,
and where

$$a_0 = (1 + a)/2, \text{ and}$$
$$a_1 = a_{-1} = (1\text{-}a)/4$$

a being the amount of attenuation to be obtained for frequency $f_0/n$, where n is the number of fields corresponding to the degree of time opening.

6. A method according to claim 1 or 2,
characterized in that the degree of time opening of the filtering window is one frame.

7. A method according to claim 1, 2 or 6,
characterized in that the attenuation time filtering is such that the value $I_t(x,y,t)$ transmitted after attenuation at a point $(x,y)$ and at time t is related to the initial value $I_0$ at the same point and at time t by the relation:

$$I_t(x,y,t) : a_0 I_0(x,y,t) + a_{-1} I_0(x,y,t\text{-}T)$$

where:
T is the recurrence period of the frame frequency,

$$a_0 = (1 + a)/2, \text{ and}$$
$$a_{-1} = (1\text{-}a)/2$$

a being the amount of attenuation to be obtained for frequency $f_0/n$, where n is the number of fields corresponding to the degree of time opening,
and in that enhancement is such that the value $I_r(x,y,t)$ after enhancement is related to the value $I_t(x,y,t)$ as transmitted by the relation:

$$I_r(x,y,t) = b_0 I_t(x,y,t) + b_{-1} I_r(x,y,t\text{-}T)$$

where

$$b_0 = (1 + a)2a \text{ and } b_{-1} = (a\text{-}1) 2a.$$

8. A method according to any one of the preceding claims,
characterized in that the beginnings and ends of sequences having a low time activity are detected and an attenuation filtering is different during said beginnings and ends from that during a sequence.

9. A system for broadcasting high definition TV programs, comprising a high definition transmitter and a high definition receiver, whose transmitter comprises a high definition encoder carrying out subsambling of the image and distributing space information over n successive fields, n being an integer greater than 1, and a transmission modulator, and whose receiver comprises a demodulator which carries out interpolation filtering and a high definition decoder,
characterized in that the transmitter comprises, between the encoder and the modulator, an attenuation module (20) comprising a time filter for partial attenuation of the energy in the region close to $f_0/n$, $f_0$ being the analysis field frequency, preserving part of the aliasing energy resulting from subsampling, and in that the receiver comprises, between the demodulator and decoder, an enhancement module (30) consisting of an enhancement time filter for restoring the aliasing energy, carrying out the same computations as the attenuation time filter with different weighing coefficients, for restoring the relative amplitudes of the attenuated components of the transmitted spectrum, in the region close to $f_0/n$.

**10.** A system according to claim 9,

characterized in that the transmitter comprises a switching circuit (26) for feeding the modulator with the image signal which was subjected to the attenuation digital treatment if the image has a low time activity, comprised between -50/2n Hz and +50/2n Hz, and in that the receiver comprises a switching circuit (36) for inserting the enhancement time filter responsive to a movement information (28) originating from the high definition encoder.

**Patentansprüche**

**1.** Verfahren zum Senden von Fernsehprogrammen mit hoher Auflösung in einem Übertragungskanal dessen Kapazität kleiner ist als das spektrale Band des Bildsignals, wobei gemäß diesem Verfahren bei der Emission eine hochauflösende Kodierung mit Unter-Abtastung durchgeführt wird, welche die räumliche Information des Bildes auf n aufeinanderfolgende Halbbilder verteilt, wobei n eine ganze Zahl größer als 1 ist, sowie beim Empfang eine Interpolationsfilterung,
**dadurch gekennzeichnet**, daß
das hochauflösend kodierte Bildsignal unterzogen wird:
- einer zeitlichen Filterung partieller Dämpfung der Energie in dem $f_0/n$ nahen Bereich, wobei $f_0$ die Halbbildfrequenz der Bildzerlegung ist und ein dem infolge der Unter-Abtastung während der besagten hochauflösenden Kodierung wiedergefalteten Spektrum entsprechender Teil der Energie vor Emission bestehen gelassen wird, und
- vor hochauflösender Dekodierung mit Interpolation beim Empfang einer zeitlichen Akzentuierungsfilterung, welche der Dämpfung entspricht und dazu bestimmt ist, die relative Amplitude der gedämpften Komponenten des übertragenen Spektrums in dem $f_0/n$ nahen Bereich zu rekonstruieren.

**2.** Verfahren nach Anspruch 1,
**dadurch gekennzeichnet**, daß
die Dämpfung und die Akzentuierung durch um die Frequenz $f_0/n$ zentrierte Filterung gemäß angehobenem Kosinus durchgeführt werden.

**3.** Verfahren nach Anspruch 1 oder 2,
**dadurch gekennzeichnet**, daß
die zeitliche Öffnung des Fensters der Filterung bei der Dämpfung und bei der Akzentuierung drei aufeinanderfolgenden Halbbildern entspricht.

**4.** Verfahren nach Anspruch 1, 2 oder 3,
**dadurch gekennzeichnet**, daß
die zeitliche Dämpfungsfilterung vorgesehen ist, um eine zwischen 5 und 10 dB liegende Dämpfung bei der Frequenz $f_0/n$ zu liefern.

**5.** Verfahren nach einem der vorhergehenden Ansprüche,
**dadurch gekennzeichnet**, daß
die zeitliche Dämpfungsfilterung derart ist, daß der nach Dämpfung in einem Punkt (x,y) und im Zeitpunkt t übertragene Wert $I_t(x,y,t)$ mit dem Anfangswert $I_0$ im gleichen Punkt und zum gleichen Zeitpunkt t verknüpft ist durch die Beziehung:

$$I_t(x,y,t) = a_0 I_0(x,y,t) + a_{-1} I_0(x,y,t\text{-}T) + a_1 I_0(x,y,t+T)$$

wobei T die Bildwiederholungsperiode ist
und wobei

$$a_0 = (1+a)/2$$
$$a_1 = a_{-1} = (1\text{-}a)/4$$

wobei a die für die Frequenz $f_0/n$ gesuchte Dämpfung ist und n die der zeitlichen Öffnung entsprechende Anzahl der Halbbilder ist.

6. Verfahren nach Anspruch 1 oder 2,

**dadurch gekennzeichnet,** daß

die zeitliche Öffnung des Filterungsfensters einem Bild entspricht.

7. Verfahren nach Anspruch 1, 2 oder 6,

**dadurch gekennzeichnet**, daß

die zeitliche Dämpfungsfilterung derart ist, daß der nach Dämpfung in einem Punkt (x,y) und im Zeitpunkt t übertragene Wert $I_t(x,y,t)$ mit dem Anfangswert $I_0$ im gleichen Punkt und zum gleichen Zeitpunkt t verknüpft ist durch die Beziehung:

$$I_t(x,y,t) = a_0 I_0(x,y,t) + a_{-1} I_0(x,y,t-T)$$

wobei T die Bildwiederholungsperiode ist

$$a_0 = (1+a)/2$$
$$a_{-1} = (1-a)/2$$

wobei a die für die Frequenz $f_0/n$ gesuchte Dämpfung ist und n die der zeitlichen Öffnung entsprechende Anzahl der Halbbilder ist,
und daß die Akzentuierung derart ist, daß der Wert $I_r(x,y,t)$ nach Akzentuierung mit dem Wert $I_t(x,y,t)$ verknüpft ist durch die Beziehung:

$$I_r(x,y,t) = b_0 I_t(x,y,t) + b_{-1} I_r(x,y,t-T)$$

wobei

$$b_0 = (1+a)2A \text{ und } b_{-1} = (a-1)2a.$$

8. Verfahren nach einem der vorhergehenden Ansprüche,

**dadurch gekennzeichnet**, daß

die Anfänge und die Enden der Sequenz mit schwacher zeitlicher Aktivität erfaßt werden und während dieser Anfänge und Enden der Sequenz eine Dämpfungsfilterung durchgeführt wird, welche sich von derjenigen während der Sequenz unterscheidet.

9. System zum Senden von Fernsehprogrammen mit hoher Auflösung umfassend einen Sender und einen Empfänger mit hoher Auflösung, dessen Sender einen hochauflösenden Kodierer aufweist, der eine Unter-Abtastung des Bildes durchführt, welche die räumliche Information auf n aufeinanderfolgende Halbbilder verteilt, wobei n eine ganze Zahl größer als 1 ist, sowie einen Emissionsmodulator und dessen Empfänger einen eine Interpolationsfilterung durchführenden Demodulator sowie einen hochauflösenden Dekodierer aufweist,

**dadurch gekennzeichnet**, daß

der Sender zwischen dem Kodierer und dem Modulator ein Dämpfungsmodul (20) umfaßt, welches durch ein zeitliches Filter partieller Dämpfung der Energie in dem $f_0/n$ nahen Bereich gebildet ist, wobei $f_0$ die Halbbildfrequenz der Bildzerlegung ist, und wobei ein Teil der von der Unter-Abtastung herrührenden Wiederfaltungsenergie bestehen gelassen wird,
und daß der Empfänger zwischen dem Demodulator und dem Dekodierer ein Akzentuierungsmodul (30) umfaßt, welches durch ein zeitliches Akzentuierungsfilter gebildet ist, das dazu bestimmt ist, die Wiederfaltungsenergie wiederherzustellen, das die gleichen Berechnungsoperationen wie das zeitliche Dämpfungsfilter durchführt mit unterschiedlichen Gewichtungskoeffizienten, derart, daß die relative Amplitude der gedämpften Komponenten des übertragenen Spektrums in dem $f_0/n$ nahen Bereich rekonstruiert wird.

10. System nach Anspruch 9,

**dadurch gekennzeichnet**, daß

der Sender eine Umschaltschaltung (26) umfaßt, welche es ermöglicht, dem Modulator das der digitalen Dämpfungsverarbeitung unterzogene Bildsignal zuzuführen, für den Fall, in dem das Bild eine schwache zwischen -50/2n Hz und +50/2n Hz liegende zeitliche Aktivität aufweist,
und daß der Empfänger eine Umschaltschaltung (36) für die Zwischenschaltung des zeitlichen Akzentuierungsfilters als Funktion einer vom hochauflösenden Kodierer stammenden Bewegungsinformation (28) aufweist.

FIG.1.

FIG.2.

FIG.4.

FIG.5.

FIG.3.

SOURCE HD

CODAGE HD

ATTÉNUATION

MODULATION ET ÉMISSION

RÉCEPTION ET DÉMODULATEUR

ACCENTUATION

DÉCODAGE HD

IMAGE HD

IMAGE COMPATIBLE

FIG.6.

DU CODEUR HD

28

20
22

24

26

FIG.7.

30
32

34

36

38

VERS DÉCODEUR HD

FIG.8.

22

20

24

26

42

MI(t−T)

$S_3$

$S_1$

$S_2$

codeur HD

MI(t)

40

t+T

$a_0$

$a_1$

$2a_1$

28

# FIG.8a.

# FIG.9a.

FIG.9.

FIG.10.

FIG.11.

FIG.12.